# EUROPEAN PATENT SPECIFICATION

(11) **EP 3 958 361 B1**
(45) Date of publication and mention of the grant of the patent: **28.02.2024**
(21) Application number: 20790827.8
(22) Date of filing: 17.04.2020
(51) Int. Cl.: H01M 8/04119, B01D 63/02

(54) **FUEL CELL HUMIDIFIER AND PACKING MEMBER FOR SAME**
BRENNSTOFFZELLENBEFEUCHTER UND FÜLLKÖRPER DAFÜR
HUMIDIFICATEUR DE PILE À COMBUSTIBLE ET ÉLÉMENT D'EMBALLAGE POUR CELUI-CI

(30) Priority: 17.04.2019 KR 20190044732; 07.10.2019 KR 20190123588
(43) Date of publication of application: 23.02.2022
(73) Proprietor: Kolon Industries, Inc., Seoul 07793 (KR)
(72) Inventor: AHN, Woong Jeon, Seoul 07793 (KR); OH, Young Seok, Seoul 07793 (KR); KIM, Kyoung Ju, Seoul 07793 (KR)
(74) Representative: Ter Meer Steinmeister & Partner
(86) International application number: PCT/KR2020/005168
(87) International publication number: WO 2020/213990

(56) References cited:
- DE-A1- 3 032 417
- DE-A1-102018 002 910
- JP-B2- 3 928 948
- KR-A- 20100 131 631
- KR-A- 20110 063 366
- KR-A- 20180 043 611
- KR-A- 20180 119 828
- KR-B1- 101 697 998
- US-A- 4 038 190
- US-A1- 2012 270 120
- US-B2- 9 190 677
- US-B2- 9 640 814

## Description

### [TECHNICAL FIELD]

The present disclosure relates to a humidifier for a fuel cell and a packing member therefor, and more particularly to a humidifier for a fuel cell capable of being manufactured with improved productivity while maintenance expenses thereof are remarkably reduced and a packing member therefor.

### [Background Art]

A fuel cell is a power generation cell that combines hydrogen and oxygen to generate electricity. The fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC).

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane is dried, power generation efficiency is abruptly reduced.

Among the methods of humidifying a polymer electrolyte membrane are 1) a bubbler humidification method comprising the steps of filling a pressureresistant container with water and allowing a target gas to pass therethrough by means of a diffuser in order to supply moisture to the gas, 2) a direct injection method comprising the steps of calculating the amount of moisture to be supplied that is necessary for fuel cell reaction and directly supplying moisture to a gas stream pipe through a solenoid valve, and 3) a membrane humidification method which supplies moisture to a gas fluid bed using a polymer separation membrane.

Among these methods, the membrane humidification method, which humidifies a polymer electrolyte membrane by providing water vapor to a gas to be supplied to the polymer electrolyte membrane by means of a membrane configured to selectively transmit only water vapor included in off-gas, is advantageous in that it is possible to reduce the weight and size of a humidifier. US 9 190 677 B2, DE 30 32 417 A1, and US 4 038 190 A relate to humidifiers with hollow fibre membranes.

A hollow fiber membrane capable of providing large transmission area per unit volume when a module is formed may preferably be used as a permselective membrane for the membrane humidification method. That is, when a humidifier is manufactured with a hollow fiber membrane, high integration of the hollow fiber membranes having large contact surface area is possible, whereby it is possible to sufficiently humidify a fuel cell even in the case of a small capacity, to use a lowpriced material, and to collect moisture and heat included in off-gas discharged from the fuel cell at a high temperature and reuse them through the humidifier.

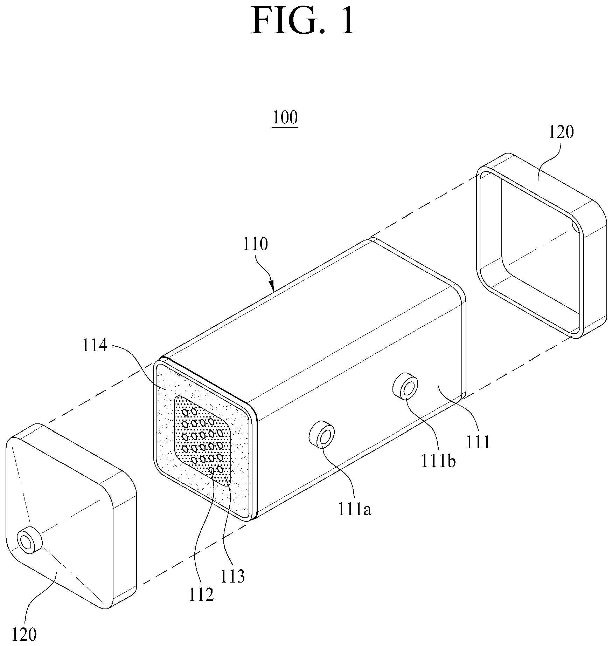

As illustrated in FIG. 1, a conventional membrane humidification type humidifier 100 includes a humidification module 110, in which moisture exchange is performed between air supplied from the outside and off-gas discharged from a fuel cell stack (not shown), and caps 120 coupled respectively to opposite ends of the humidification module 110.

One of the caps 120 transmits air supplied from the outside to the humidification module 110, and the other cap transmits air humidified by the humidification module 110 to the fuel cell stack.

The humidification module 110 includes a middle case 111 having an off-gas inlet 111a and an off-gas outlet 111b and a plurality of hollow fiber membranes 112 disposed in the middle case 111. Opposite ends of a bundle of hollow fiber membranes 112 are potted in fixing layers 113. In general, each of the fixing layers 113 is formed by hardening a liquid polymer, such as liquid polyurethane resin, using a casting method.

Air supplied from the outside flows along the lumens of the hollow fiber membranes 112a. Off-gas introduced into the middle case 111 through the off-gas inlet 111a comes into contact with the outer surfaces of the hollow fiber membranes 112, and is discharged from the middle case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the lumens of the hollow fiber membranes 112.

Inner spaces of the caps 220 must fluidly communicate only with the lumens of the hollow fiber membranes 112 while completely isolated from an inner space of the middle case 111. Otherwise, air leakage due to pressure difference occurs, whereby the amount of humidified air supplied to the fuel cell stack is reduced, and thus power generation efficiency of a fuel cell decreases.

In general, as illustrated in FIG. 1, the fixing layers 113, in which the ends of the plurality of hollow fiber membranes 112 are potted, and resin layers 114 between the fixing layers 113 and the middle case 111 isolate the inner spaces of the caps 120 from the inner space of the middle case 111. Similarly to the fixing layers 113, each of the resin layers 114 is generally formed by hardening a liquid polymer, such as liquid polyurethane resin, using the casting method.

Since a casting process for forming the resin layers 114 requires a relatively long process time, however, productivity of the humidifier 100 is reduced.

In addition, since the resin layers 114 are bonded to an inner wall of the middle case 111 as well as to the fixing layers 113, the entirety of the humidification module 110 needs to be replaced if the hollow fiber membrane 112 becomes defective, which incurs huge maintenance expenses.

Furthermore, a gap may be generated between each of the resin layers 114 and the middle case 111 as a result of repeated operation of the fuel cell. That is, when operation and stop of the fuel cell are repeated, the resin layer 114 may be alternately expanded and contracted, whereby there is a high possibility of the resin layer 114 being separated from the middle case 111 due to a difference in coefficient of thermal expansion between the middle case 111 and the resin layer 114. When the gap is generated between the resin layer 114 and the middle case 111, air leakage due to pressure difference occurs, whereby the amount of humidified air supplied to the fuel cell stack is reduced, and therefore power generation efficiency of the fuel cell is reduced, as previously described.

In order to prevent air leakage due to generation of the gap between the resin layer 114 and the middle case 111, performing an additional process, such as application of a sealant therebetween and/or attachment of an outer packing member, may be considered. Since such an additional process also requires additional process time, however, productivity of the humidifier 100 is reduced.

### [Disclosure]

### [Technical Problem]

Therefore, the present disclosure relates to a humidifier for a fuel cell capable of preventing problems caused by limitations and shortcomings of the related art described above and a packing member therefor.

It is an object of the present disclosure to provide a humidifier for a fuel cell capable of being manufactured with improved productivity while maintenance expenses thereof are remarkably reduced.

It is another object of the present disclosure to provide a packing member capable of enabling a humidifier for a fuel cell to be manufactured with improved productivity and to remarkably reduce maintenance expenses thereof.

In addition to the above objects, other features and advantages of the present disclosure will be described hereinafter, or will be clearly understood by those skilled in the art to which the present disclosure pertains from the following description thereof.

### [Technical Solution]

In accordance with an aspect of the present disclosure, there is provided a humidifier for a fuel cell, the humidifier including a humidification module configured to humidify air supplied from outside using moisture in off-gas discharged from a fuel cell stack and a cap coupled to one end of the humidification module, wherein the humidification module includes a middle case and at least one cartridge disposed in the middle case, the cartridge including a plurality of hollow fiber membranes, and the humidifier further includes a packing member airtightly coupled to one end of the humidification module through a mechanical assembly method such that the cap can fluidly communicates only with the hollow fiber membranes.

The packing member includes a packing portion having a hole into which an end of the cartridge is inserted, the packing portion being interposed between the middle case and the cartridge, and an edge portion surrounding the packing portion.

The packing portion includes a main body and a wing portion surrounding the hole and clinging to the end of the cartridge inserted into the hole.

The wing portion may be inclined relative to the main body at a predetermined angle such that the packing portion has a first groove between the main body and the wing portion.

The packing portion may have a first surface facing the cap and a second surface opposite thereto, and the first groove may be formed on the first surface.

The wing portion may project from the main body toward the center of the hole.

The wing portion may include first and second sub-wing portions arranged side by side in a central axial direction of the hole.

Each of the first and second sub-wing portions may project from the main body toward the center of the hole.

One of the first and second sub-wing portions may project from the main body toward the center of the hole, and the other of the first and second sub-wing portions may be inclined relative to the main body at a predetermined angle.

Each of the hole and the wing portion may have a shape corresponding to the shape of the end of the cartridge inserted into the hole.

The edge portion may have a second groove into which at least a portion of an end of the middle case is inserted.

The main body may have a first surface facing the cap and a second surface opposite thereto, and the main body may have a third groove formed on at least one of the first and second surfaces.

Each of the packing portion and the edge portion may have first hardness of 10 to 100 Shore A, and the packing member may further include a reinforcement member inserted into at least a portion of the main body, the reinforcement member having second hardness higher than the first hardness.

The humidification module includes two or more cartridges, the packing portion has two or more holes into which the cartridges are inserted, respectively, the packing portion includes two or more wing portions respectively surrounding the holes, and the main body includes a peripheral portion and at least one rib between the holes.

The packing member may have a first surface facing the cap and a second surface opposite thereto, the edge portion may have a second groove into which at least a portion of an end of the middle case is inserted, the second groove being formed on the second surface, and the rib may have a third groove formed on at least one of the first and second surfaces.

Each of the packing portion and the edge portion may have first hardness of 10 to 100 Shore A, and the packing member may further include a reinforcement member inserted into at least a portion of the main body, the reinforcement member having second hardness higher than the first hardness.

The reinforcement member may be inserted into the rib.

The cartridge may further include an inner case having an opening at an end thereof, the plurality of hollow fiber membranes being disposed in the inner case, and a fixing layer in which the ends of the plurality of hollow fiber membranes are potted, the fixing layer closing the opening of the inner case.

At least a portion of the fixing layer may be located outside the inner case, and the wing portion may be in tight contact with the fixing layer.

The entirety of the fixing layer may be located inside the inner case, and the wing portion may be in tight contact with the inner case.

In accordance with another aspect of the present disclosure, there is provided a packing member for a humidifier including a middle case and at least two cartridges disposed in the middle case, the cartridge including a plurality of hollow fiber membranes, the packing member including a packing portion having two or more holes into which an end of the cartridge can be inserted, the packing portion being configured to be interposed between the middle case and the cartridge, and an edge portion surrounding the packing portion, wherein the packing portion includes a main body and a wing portion surrounding the hole, and the wing portion (i) projects from the main body toward the center of the hole or (ii) is inclined relative to the main body at a predetermined angle such that the packing portion has a first groove between the main body and the wing portion, so as to be able to come into tight contact with the end of the cartridge to be inserted into the hole.

The wing portion may be inclined relative to the main body at a predetermined angle, and the angle between the wing portion and the main body in the first groove may be 5° or more and less than 90°.

The wing portion may include first and second sub-wing portions arranged side by side in a central axial direction of the hole.

Each of the first and second sub-wing portions may project from the main body toward the center of the hole.

One of the first and second sub-wing portions may project from the main body toward the center of the hole, and the other of the first and second sub-wing portions may be inclined relative to the main body at a predetermined angle.

The edge portion may have a second groove into which at least a portion of an end of the middle case can be inserted.

The wing portion may be inclined relative to the main body at a predetermined angle, the packing member may have a first surface and a second surface opposite thereto, the first groove may be formed on the first surface, and the second groove may be formed on the second surface.

The main body may have a third groove formed on at least one of the first and second surfaces.

Each of the packing portion and the edge portion may have first hardness of 10 to 100 Shore A, and the packing member may further include a reinforcement member inserted into at least a portion of the main body, the reinforcement member having second hardness higher than the first hardness.

The packing portion has two or more holes into which two or more cartridges can be inserted, respectively, the packing portion includes two or more wing portions respectively surrounding the holes, and the main body includes a peripheral portion and at least one rib between the holes.

The packing member may have a first surface on which the first groove is formed and a second surface opposite thereto, the edge portion may have a second groove into which at least a portion of an end of the middle case can be inserted, the second groove being formed on the second surface, and the rib may have a third groove formed on at least one of the first and second surfaces.

Each of the packing portion and the edge portion may have first hardness of 10 to 100 Shore A, and the packing member may further include a reinforcement member inserted into at least a portion of the main body, the reinforcement member having second hardness higher than the first hardness.

The reinforcement member may be inserted into the rib.

The general description of the present disclosure given above is provided merely to illustrate or describe the present invention.

### [Advantageous Effects]

According to the present disclosure, air leakage between a middle case and a cap is prevented through mechanical assembly of a packing member, whereby it is possible to omit a conventional casting process (i.e. a process of injecting a liquid polymer into a mold and hardening the liquid polymer) and an additional sealing process (i.e. a process of applying and hardening a sealant). According to the present disclosure, therefore, production time of a humidifier for a fuel cell is reduced while air leakage between the middle case and the cap is prevented, whereby it is possible to remarkably improve productivity thereof.

In addition, since the packing member according to the present disclosure configured to prevent air leakage between the middle case and the cap is coupled to a humidification module through a mechanical assembly method, when a problem occurs at a certain part of the humidification module, it is possible to mechanically and thus easily separate the packing member therefrom and repair or replace only the problematic part. According to the present disclosure, therefore, it is possible considerably reduce maintenance expenses of the humidifier for a fuel cell.

### [Brief Description of Drawings]

The accompanying drawings, which are included to assist in understanding of the present disclosure and are incorporated in and constitute a part of the present specification, illustrate embodiments of the present disclosure and serve to explain the principle of the present disclosure together with the detailed description of the present disclosure.
FIG. 1 is an exploded perspective view schematically showing a conventional humidifier for a fuel cell.
FIGS. 2(a) to 2(c) are an exploded perspective view, an exploded sectional view, and a sectional view schematically showing a humidifier for a fuel cell according to a first embodiment of the present disclosure including a packing member according to a first embodiment of the present disclosure, respectively.
FIGS. 3(a) and 3(b) show various methods of coupling between the packing member and a middle case.
FIG. 4 is a sectional view schematically showing a humidifier for a fuel cell according to a second embodiment of the present disclosure including the packing member according to the first embodiment of the present disclosure.
FIG. 5 is a sectional view schematically showing a humidifier for a fuel cell according to a third embodiment of the present disclosure including the packing member according to the first embodiment of the present disclosure.
FIGS. 6(a) to 6(c) are an exploded perspective view, an exploded sectional view, and a sectional view schematically showing a humidifier for a fuel cell according to a fourth embodiment of the present disclosure, and according to the invention, including a packing member according to a second embodiment of the present disclosure, respectively.
FIG. 7 is a sectional view schematically showing a humidifier for a fuel cell according to a fifth embodiment of the present disclosure, and according to the invention, including the packing member according to the second embodiment of the present disclosure.
FIGS. 8(a) and 8(b), Fig. 8 (b) being according to the present invention, are sectional views schematically showing packing members according to third and fourth embodiments of the present disclosure, respectively.
FIGS. 9(a) and 9(b), Fig. 9 (b) being according to the present invention, are sectional views schematically showing packing members according to fifth and sixth embodiments of the present disclosure, respectively.
FIGS. 10(a) and 10(b), Fig. 10 (b) being according to the present invention, are sectional views schematically showing packing members according to seventh and eighth embodiments of the present disclosure, respectively.
FIGS. 11(a) and 11(b), Fig. 11(b) being according to the present invention, are sectional views schematically showing packing members according to ninth and tenth embodiments of the present disclosure, respectively.
FIGS. 12(a) and 12(b), Fig. 12 (b) being according to the present invention, are sectional views schematically showing packing members according to eleventh and twelfth embodiments of the present disclosure, respectively.

### [Detailed Description of Invention]

Hereinafter, embodiments of the present disclosure will be described in detail with reference to the accompanying drawings. However, the following embodiments are illustratively provided merely for clear understanding of the present invention and do not limit the scope of the present invention

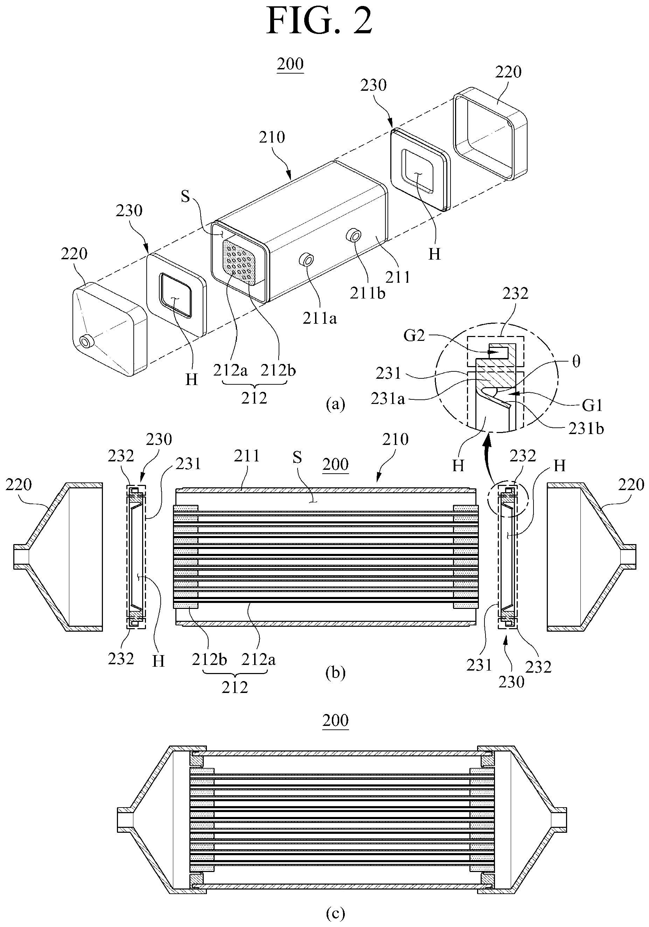

FIGS. 2(a) to 2(c) are an exploded perspective view, an exploded sectional view, and a sectional view schematically showing a humidifier for a fuel cell according to a first embodiment of the present disclosure including a packing member according to a first embodiment of the present disclosure, respectively.

As illustrated in FIGS. 2(a) to 2(c), the humidifier 200 for a fuel cell according to the present disclosure includes a humidification module 210 configured to humidify air supplied from the outside using moisture in off-gas discharged from a fuel cell stack. Opposite ends of the humidification module 210 are coupled to caps 220, respectively.

One of the caps 220 transmits air supplied from the outside to the humidification module 210, and the other cap transmits air humidified by the humidification module 210 to the fuel cell stack.

The humidification module 210, in which moisture exchange is performed between air supplied from the outside and off-gas, includes a middle case 211 having an off-gas inlet 211a and an off-gas outlet 211b and at least one cartridge 212 disposed in the middle case 211.

Each of the middle case 211 and the caps 220 according to the present disclosure may be made of hard plastic (e.g. polycarbonate) or metal, and may have a circular or polygonal section in a lateral direction. The circle includes an oval, and the polygon includes a polygon having rounded corners.

The cartridge 212 may include a plurality of hollow fiber membranes 212a and a fixing layer 212b configured to fix the hollow fiber membranes. For example, the ends of the hollow fiber membranes 212a may be potted in the fixing layer 212b.

Each of the hollow fiber membranes 212a may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof, and the fixing layer 212b may be formed by hardening liquid resin, such as liquid polyurethane resin, using a casting method, such as dip potting or centrifugal potting.

Air supplied from the outside flows along lumens of the hollow fiber membranes 212a. Off-gas introduced into the middle case 211 through the off-gas inlet 211a comes into contact with the outer surfaces of the hollow fiber membranes 212a, and is discharged from the middle case 211 through the off-gas outlet 211b. When the off-gas comes into contact with the outer surfaces of the hollow fiber membranes 212a, moisture contained in the off-gas is transmitted through the hollow fiber membranes 212a to humidify air flowing along the lumens of the hollow fiber membranes 212a.

As previously described, the caps 220 must fluidly communicate only with the lumens of the hollow fiber membranes 212a in a state of being completely isolated from an inner space S of the middle case 211. If not, air leakage due to pressure difference occurs, whereby the amount of humidified air supplied to the fuel cell stack is reduced, and therefore power generation efficiency of a fuel cell is reduced.

Consequently, the humidifier 200 for a fuel cell according to the present disclosure further includes a packing member 230 airtightly coupled to each end of the humidification module 210 through a mechanical assembly method.

Since air leakage between the middle case 211 and each cap 220 is prevented through mechanical assembly of the packing member 230 according to the present disclosure, a conventional casting process (i.e. a process of injecting a liquid resin into a mold and hardening the liquid resin) and an additional sealing process (i.e. a process of applying and hardening a sealant) may be omitted. According to the present disclosure, therefore, production time of the humidifier 200 for a fuel cell is reduced while air leakage between the middle case 211 and each cap 220 is prevented, whereby it is possible to remarkably improve productivity thereof.

In addition, since the packing member 230 according to the present disclosure configured to prevent air leakage between the middle case 211 and each cap 220 is coupled to the humidification module 210 through a mechanical assembly method, when a problem occurs at a certain part (e.g., the cartridge 212) of the humidification module 210, it is possible to mechanically and thus easily separate the packing member 230 therefrom and repair or replace only the problematic part. According to the present disclosure, therefore, it is possible considerably reduce maintenance expenses of the humidifier 200 for a fuel cell.

The packing member 230 according to the present disclosure includes a packing portion 231 and an edge portion 232 surrounding the packing portion. The packing member 230 according to the present disclosure, i.e. the packing portion 231 and the edge portion 232, may be made of an elastic material having a hardness of 10 to 100 Shore A, preferably 30 to 70 Shore A, more preferably 40 to 60 Shore A (e.g. silicone or rubber).

The packing portion 231 has a hole H into which the end of the cartridge 212 (the fixing layer 212b in this embodiment) can be inserted, and is configured to be interposed between the middle case 211 and the cartridge 212.

The packing portion 231 includes a main body 231a and a wing portion 231b surrounding the hole H and clinging to the end of the cartridge 212 inserted into the hole H.

According to an embodiment of the present disclosure, as illustrated in FIG. 2(b), the wing portion 231b may be inclined relative to the main body 231a at a predetermined angle such that the packing portion 231 has a first groove G1 between the main body 231a and the wing portion 231b.

FIG. 2(b) illustrates the packing portion 231 configured such that one end of the wing portion 231b is connected to one end of the main body 231a; however, the present disclosure is not limited thereto. One end of the wing portion 231b may be connected to any portion of the main body 231.

The first groove G1 may be formed on any one of a first surface of the packing portion 231 that faces the cap 220 and a second surface of the packing portion, which is opposite to the first surface. However, it may be preferable for the first groove G1 to be formed on the first surface in consideration of assembly convenience. Also, when a humidifier has a structure in which humid off-gas flows outside the hollow fiber membranes 212a and air supplied from the outside flows along the lumens of the hollow fiber membranes 212a (i.e., when the internal pressure of the cap 220 is generally higher than the internal pressure of the middle case 211), only the first groove G1 formed on the first surface can allow the wing portion 231b to be pressurized and come into tight contact with the end of the cartridge 212 such that air leakage can be definitely avoided. By contrast, when a humidifier has a structure in which air supplied from the outside flows outside the hollow fiber membranes 212a and humid off-gas flows along the lumens of the hollow fiber membranes 212a (i.e., when the internal pressure of the middle case 211 is generally higher than the internal pressure of the cap 220), it may be desirable that the first groove G1 be formed on the second surface, since only the first groove G1 formed on the second surface can allow the wing portion 231b to be pressurized and come into tight contact with the end of the cartridge 212.

In addition, since the wing portion 231b is inclined relative to the main body 231a at a predetermined angle (i.e. the wing portion is inclined toward the center of the hole H) before the packing member 230 according to the present disclosure is assembled to the humidification module 210, as illustrated in FIG. 2(b), the wing portion 231b may come into tighter contact with the end of the cartridge 212 when the end of the cartridge 212 is inserted into the hole H.

Before the packing member 230 according to the present disclosure is assembled to the humidification module 210, the angle θ between the wing portion 231b and the main body 231a in the first groove G1 may be 5° or more and less than 90°, preferably 10° to 75°, more preferably 15° to 60°. When the end of the cartridge 2121 is inserted into the hole H, the wing portion 231b, which is made of an elastic material, may be pushed, whereby the angle θ may be reduced, and the wing portion 231b may come into tighter contact with the end of the cartridge 212 due to elastic force thereof.

Since the wing portion 231b according to the present disclosure is elastic, the wing portion may perform a vibration absorption function, and therefore it is possible to prevent damage to the humidifier due to vibration.

In order to prevent a gap from being formed between the packing member 230 and the cartridge 212, thus preventing air leakage therethrough, it is preferable for each of the hole H and the wing portion 231b of the packing portion 231 to have a shape corresponding to the shape of the end of the cartridge 212 inserted into the hole H. For example, when the end of the cartridge 212 inserted into the hole H is the fixing layer 212b, as in this embodiment, the hole H and the wing portion 231b of the packing portion 231 need to be designed so as to correspond to the shape of the fixing layer 212b which is to be determined by a mold used in a casting process.

In order to prevent a gap from being formed between the packing member 230 and the middle case 211, and thus prevent air leakage therethrough, the edge portion 232 may be provided with a second groove G2 into which at least a portion of an end of the middle case 211 is inserted. The second groove G2 may be formed on the surface of the packing member 230 opposite the surface of the packing member in which the first groove G1 is formed.

For example, as illustrated in FIG. 2(c), the entirety of one end of the middle case 211 may be inserted into the second groove G2 of the edge portion 232.

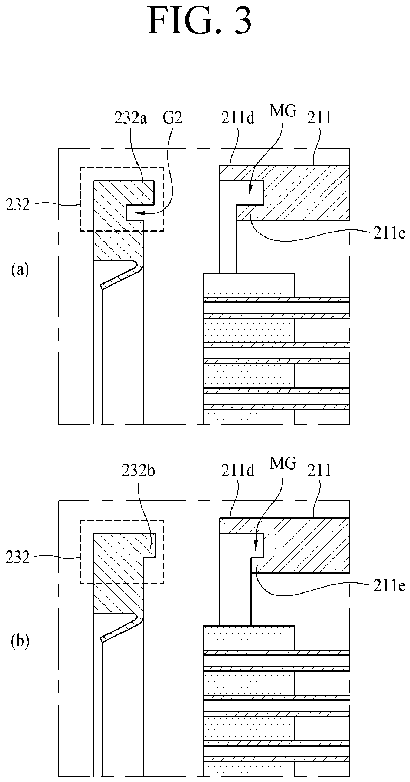

Alternatively, as illustrated in FIG. 3(a), one end of the middle case 211 may include an outer rim 211d and an inner rim 211e, between which a groove MG is provided, and only the inner rim 211e of the middle case 211 may be inserted into the second groove G2 of the edge portion 232. At this time, an outer rim 232a of the edge portion 232 abutting the second groove G2 is inserted into the groove MG of the middle case 211. This engagement structure more securely prevents air leakage through the packing member 230 and the middle case 211.

As another alternative, as illustrated in FIG. 3(b), one end of the middle case 211 may include an outer rim 211d and an inner rim 211e, between which a groove MG is provided, and an outer projection 232b of the edge portion 232 may be inserted into the groove MG of the middle case 211.

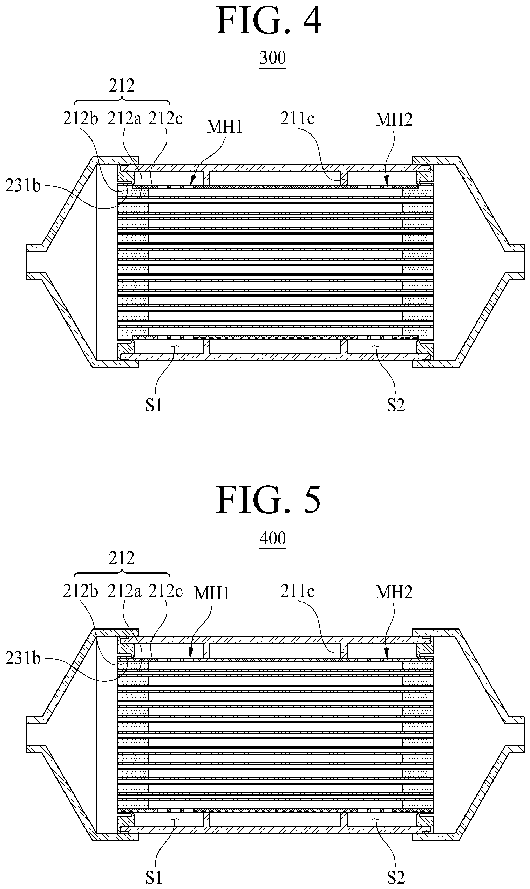

Hereinafter, a humidifier 300 for a fuel cell according to a second embodiment of the present disclosure including the packing member 230 according to the first embodiment of the present disclosure will be described with reference to FIG. 4.

As illustrated in FIG. 4, the humidifier 300 for a fuel cell according to the second embodiment of the present disclosure is substantially identical to the humidifier 200 for a fuel cell according to the first embodiment described above except that (i) the inner space of the middle case 211 is partitioned into a first space S1 and a second space S2 by partitions 211c and (ii) the cartridge 212 further includes an inner case 212c.

The inner case 212 is provided with an opening at each end thereof, and the hollow fiber membranes 212a are disposed in the inner case. The fixing layer 212b, in which the ends of the hollow fiber membranes 212a are potted, closes the opening of the inner case 212c.

As shown in FIG. 4, at least a portion of the fixing layer 212b may be located outside the inner case 212c, and the wing portion 231b of the packing member 230 may come into tight contact with the fixing layer 212b.

The inner case 212c has a plurality of holes MH1 arranged in a mesh shape for fluidic communication with the first space S1 (hereinafter referred to as "first mesh holes") and a plurality of holes MH2 arranged in a mesh shape for fluidic communication with the second space S2 (hereinafter referred to as "second mesh holes").

Off-gas introduced into the first space S1 of the middle case 211 through the off-gas inlet 211a flows into the inner case 212c through the first mesh holes MH1 and comes into contact with the outer surfaces of the hollow fiber membranes 212a. Subsequently, the off-gas, from which moisture has been removed, flows into the second space S2 through the second mesh holes MH2 and is discharged from the middle case 211 through the off-gas outlet 211c.

The cartridge 212 including the inner case 212c described above may not only be easily assembled to the middle case 211 but also may be easily replaced.

FIG. 5 is a sectional view schematically showing a humidifier 400 for a fuel cell according to a third embodiment of the present disclosure including the packing member 230 according to the first embodiment of the present disclosure.

As illustrated in FIG. 5, the humidifier 400 for a fuel cell according to the third embodiment of the present disclosure is substantially identical to the humidifier 300 for a fuel cell according to the second embodiment described above except that the entirety of the fixing layer 212b is located in the inner case 212c and that the wing portion 231b of the packing member 230 comes into tight contact with the inner case 212c, rather than the fixing layer 212b.

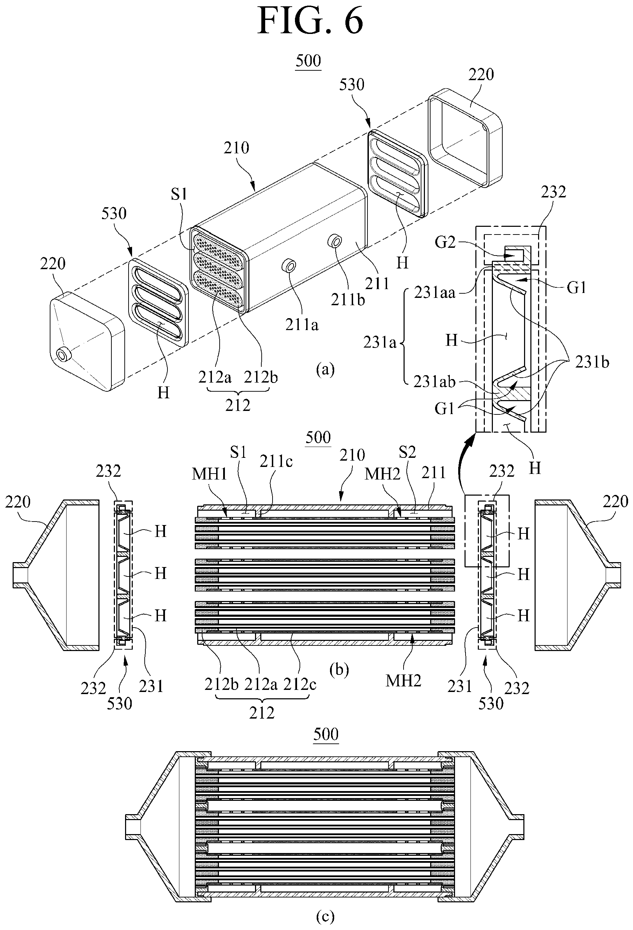

FIGS. 6(a) to 6(c) are an exploded perspective view, an exploded sectional view, and a sectional view schematically showing a humidifier 500 for a fuel cell according to a fourth embodiment of the present disclosure including a packing member 530 according to a second embodiment of the present disclosure, respectively.

As illustrated in FIGS. 6(a) to 6(c), the humidifier 500 for a fuel cell according to the fourth embodiment of the present disclosure is substantially identical to the humidifier 300 for a fuel cell according to the second embodiment described above except that (i) the humidification module 210 includes two or more cartridges 212, (ii) the packing portion 231 has two or more holes H into which the cartridges 212 are inserted, respectively, (iii) the packing portion 231 includes two or more wing portions 231b respectively surrounding the holes H, and (iv) the main body 231a includes a peripheral portion 231aa and at least one rib 231ab between the holes H.

Since the plurality of cartridges 212, each of which includes the inner case 212c, is mounted in the middle case 211 so as to be spaced apart from each other by a predetermined distance, off-gas may be uniformly distributed to all of the hollow fiber membranes 212a, and only specific one(s) of the cartridges 212 that are defective may be selectively replaced, whereby it is possible to further reduce maintenance expenses of the humidifier 500 for a fuel cell.

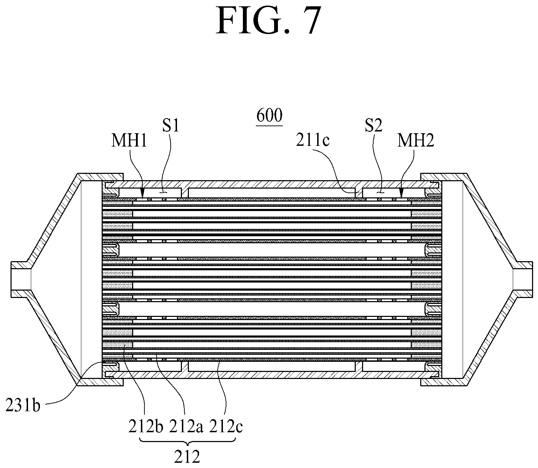

FIG. 7 is a sectional view schematically showing a humidifier 600 for a fuel cell according to a fifth embodiment of the present disclosure including the packing member 530 according to the second embodiment of the present disclosure.

As illustrated in FIG. 7, the humidifier 600 for a fuel cell according to the fifth embodiment of the present disclosure is substantially identical to the humidifier 500 for a fuel cell according to the fourth embodiment described above except that the entirety of the fixing layer 212b of each of the cartridges 212 is located in an inner case 212c corresponding thereto and that the wing portions 231b of the packing member 230 come into tight contact with the inner cases 212c, rather than the fixing layers 212b.

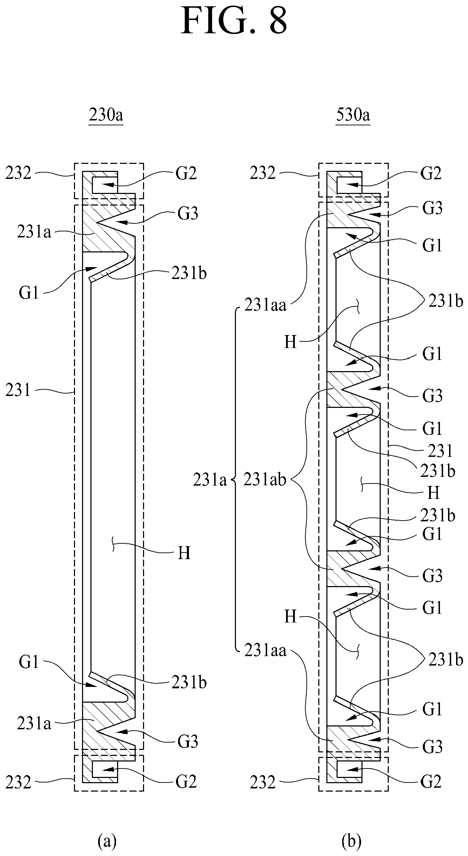

FIGS. 8(a) and 8(b) are sectional views schematically showing packing members 230a and 530a according to third and fourth embodiments of the present disclosure, respectively.

The packing member 230a according to the third embodiment of the present disclosure is substantially identical to the packing member 230 according to the first embodiment described above except that the main body 231a has a third groove G3 formed on at least one of a first surface thereof that faces the cap 220 and a second surface thereof, which is opposite the first surface. For example, as shown in FIG. 8(a), the third groove G3 may be formed on the surface of the packing member 230a opposite the surface of the packing member in which the first groove G1 is formed (i.e. the second surface).

Similarly, the packing member 530a according to the fourth embodiment of the present disclosure is substantially identical to the packing member 530 according to the second embodiment described above except that the main body 231a (i.e. the peripheral portion 231aa and/or the rib 231ab) has a third groove G3 formed on at least one of a first surface thereof that faces the cap 220 and a second surface thereof, which is opposite the first surface. For example, as shown in FIG. 8(b), the third groove G3 may be formed on the surface of the packing member 530a opposite the surface of the packing member in which the first groove G1 is formed (i.e. the second surface).

The third groove G3 of the packing member 230a or 530a (i) may enable easy mechanical assembly between the packing member 230a or 530a and the humidification module 210, (ii) may provide elastic force to the packing member 230a or 530a at the time of mechanical assembly, thereby improving airtightness, and (iii) may perform a vibration absorption function, thereby preventing damage to the apparatus due to vibration.

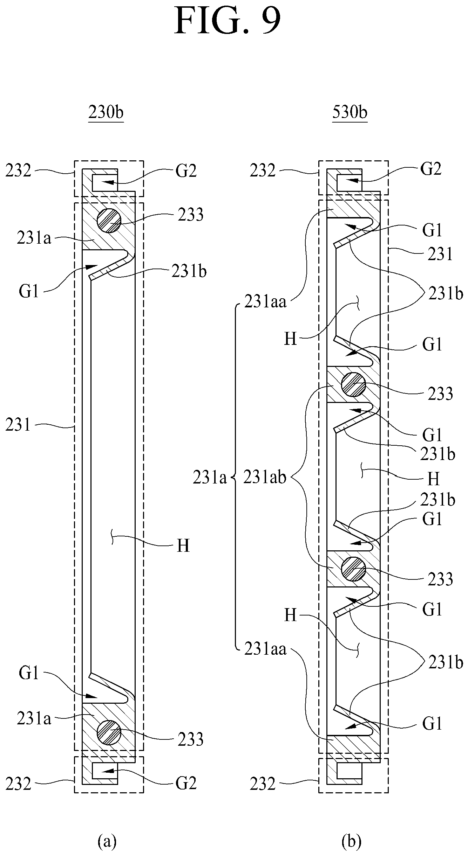

FIGS. 9(a) and 9(b) are sectional views schematically showing packing members 230b and 530b according to fifth and sixth embodiments of the present disclosure, respectively.

As illustrated in FIG. 9(a), the packing member 230b according to the fifth embodiment of the present disclosure is substantially identical to the packing member 230 according to the first embodiment described above except that the packing member further includes a reinforcement member 233 inserted into at least a portion of the main body 231a.

Similarly, the packing member 530b according to the sixth embodiment of the present disclosure is substantially identical to the packing member 530 according to the second embodiment described above except that the packing member further includes a reinforcement member 233 inserted into at least a portion of the main body 231a. For example, as shown in FIG. 9(b), the reinforcement member 233 may be inserted into the rib 231ab of the main body 231a, which is particularly deformable. In addition, the reinforcement member 233 may be embedded in the peripheral portion 231aa of the main body 231a as well as the rib 231ab, although not shown.

The packing portion 231 and the edge portion 232 of the packing member 230b or 530b may be made of an elastic material having first hardness of 10 to 100 Shore A, preferably 30 to 70 Shore A, more preferably 40 to 60 Shore A (e.g. silicone or rubber), and the reinforcement member 233 may have second hardness, which is higher than the first hardness. For example, the reinforcement member 233 may be made of metal, thermoplastic resin, or thermosetting resin.

The reinforcement member 233, the hardness of which is higher than the hardness of the packing member 230b or 530b, prevents the main body 231a from being deformed when the packing member 230b or 530b is mechanically assembled to the humidification module 210 or during operation of the humidifier, whereby it is possible to more securely prevent air leakage.

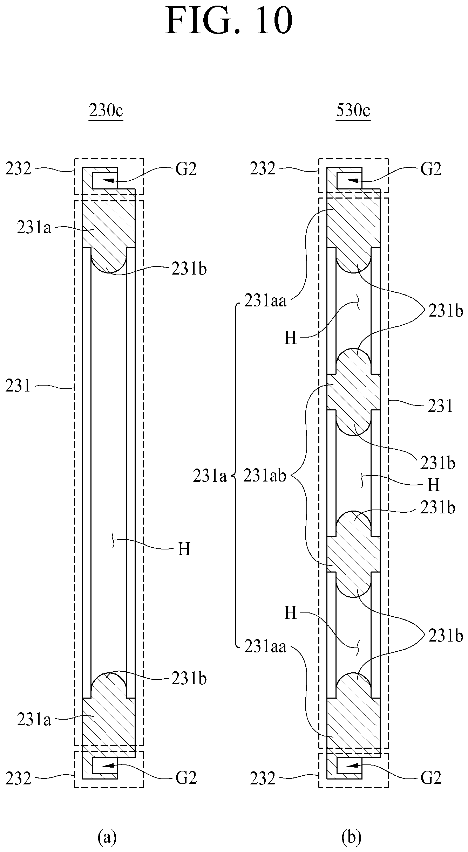

FIGS. 10(a) and 10(b) are sectional views schematically showing packing members according to seventh and eighth embodiments of the present disclosure, respectively.

The packing member 230c according to the seventh embodiment of the present disclosure is substantially identical to the packing member 230 according to the first embodiment described above except that the wing portion 231b projects from the main body 231a toward the center of the hole H. That is, as shown in FIG. 10(a), the wing portion 231b according to the seventh embodiment of the present disclosure projects perpendicularly from the inner circumferential surface of the main body 231a toward the center of the hole H.

Similarly, as shown in FIG. 10(b), the packing member 530c according to the eighth embodiment of the present disclosure is substantially identical to the packing member 530 according to the second embodiment described above except that the wing portions 231b project from the main body 231a (i.e. the peripheral portion 231aa and the rib 231ab) toward the center of the hole H. That is, each of the wing portions 231b according to the eighth embodiment of the present disclosure projects perpendicularly from the inner circumferential surface of the peripheral portion 231aa and/or the rib 231ab toward the center of a corresponding one of the holes H.

Since the wing portion(s) 231b projects perpendicularly from the main body 231a toward the center of the hole H, the wing portion 231b, which is made of an elastic material, may be deformed when the end of the cartridge 212 is inserted into the hole H, whereby the volume of the wing portion may be reduced, and therefore the wing portion 231b may come into tighter contact with the end of the cartridge 212 due to elastic force thereof.

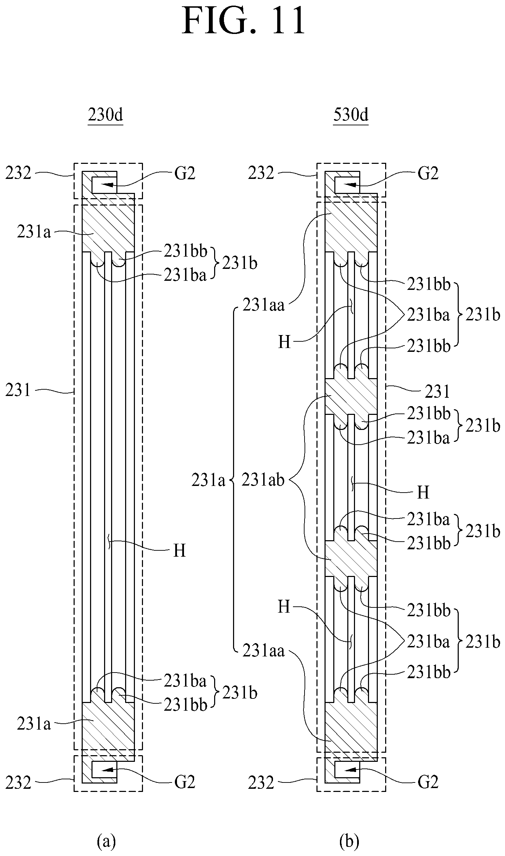

FIGS. 11(a) and 11(b) are sectional views schematically showing packing members according to ninth and tenth embodiments of the present disclosure, respectively.

As shown in FIG. 11(a), the packing member 230d according to the ninth embodiment of the present disclosure is substantially identical to the packing member 230 according to the first embodiment described above except that the wing portion 231b includes first and second sub-wing portions 231ba and 231bb arranged side by side in a central axial direction of the hole H and that both the first and second sub-wing portions 231ba and 231bb project toward the center of the hole H. The wing portion 231b may further include at least one third sub-wing portion (not shown) arranged parallel to the first and second sub-wing portions 231ba and 231bb in the central axial direction of the hole H, the third sub-wing portion projecting toward the center of the hole H.

Similarly, as shown in FIG. 11(b), the packing member 530d according to the tenth embodiment of the present disclosure is substantially identical to the packing member 530 according to the second embodiment described above except that each of the wing portions 231b includes first and second sub-wing portions 231ba and 231bb arranged side by side in a central axial direction of a corresponding one of the holes H and that both the first and second sub-wing portions 231ba and 231bb project from the main body 231a (i.e. the peripheral portion 231aa and the rib 231ab) toward the center of the hole H. Each of the wing portions 231b according to the tenth embodiment of the present disclosure may also further include at least one third sub-wing portion (not shown) arranged parallel to the first and second sub-wing portions 231ba and 231bb in the central axial direction of a corresponding one of the holes H, the third sub-wing portion projecting toward the center of the hole H.

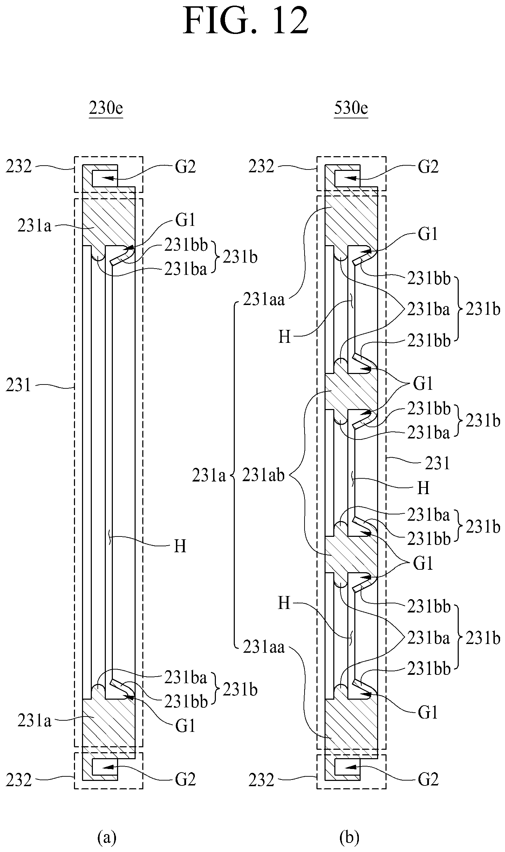

FIGS. 12(a) and 12(b) are sectional views schematically showing packing members according to eleventh and twelfth embodiments of the present disclosure, respectively.

As shown in FIG. 12(a), the packing member 230d according to the eleventh embodiment of the present disclosure is substantially identical to the packing member 230 according to the first embodiment described above except that the wing portion 231b includes first and second sub-wing portions 231ba and 231bb arranged side by side in the central axial direction of the hole H, that one of the first and second sub-wing portions (the first sub-wing portion 231ba in FIG. 12(a)) projects from the main body 231a toward the center of the hole H, and that the other sub-wing (the second sub-wing portion 231bb in FIG. 12(a)) is inclined relative to the main body 231a at a predetermined angle (e.g. 5° or more and less than 90°). The wing portion 231b may further include at least one third sub-wing portion (not shown) arranged parallel to the first and second sub-wing portions 231ba and 231bb in the central axial direction of the hole H, the third sub-wing portion projecting toward the center of the hole H or being inclined relative to the main body 231a at a predetermined angle.

Similarly, as shown in FIG. 12(b), the packing member 530e according to the twelfth embodiment of the present disclosure is substantially identical to the packing member 530 according to the second embodiment described above except that each of the wing portions 231b includes first and second sub-wing portions 231ba and 231bb arranged side by side in the central axial direction of a corresponding one of the holes H, that one of the first and second sub-wing portions (the first sub-wing portion 231ba in FIG. 12(b)) projects from the main body 231a toward the center of the hole H, and that the other sub-wing (the second sub-wing portion 231bb in FIG. 12(b)) is inclined relative to the main body 231a at a predetermined angle (e.g. 5° or more and less than 90°). Each of the wing portions 231b according to the twelfth embodiment of the present disclosure may also further include at least one third sub-wing portion (not shown) arranged parallel to the first and second sub-wing portions 231ba and 231bb in the central axial direction of a corresponding one of the holes H, the third sub-wing portion projecting toward the center of the hole H or being inclined relative to the main body 231a at a predetermined angle.

In the eleventh and twelfth embodiments described above, the first sub-wing portion 231ba, which projects from the main body 231a toward the center of the hole H, may be disposed so as to face the first groove G1 between the second sub-wing portion 231bb and the main body 231a, as illustrated in FIGS. 11(a) and 11(b). However, the positions of the first and second sub-wing portions 231ba and 231bb may be interchanged.

According to the ninth to twelfth embodiments of the present disclosure, it is possible to achieve double packing through the first and second sub-wing portions 231ba and 231bb spaced apart from each other by a predetermined distance, and therefore it is possible to more securely prevent gas leakage.

Each of the packing members 230a and 530a according to the third and fourth embodiments of the present disclosure may also include the reinforcement member 233 according to the fifth or sixth embodiment, and each of the packing members 230c, 530c, 230d, 530d, 230e, and 530e according to the seventh to twelfth embodiments of the present disclosure may also include the third groove G3 and/or the reinforcement member 233 according to the third to sixth embodiments.

## Claims

1. A humidifier (500) for a fuel cell, the humidifier (500) comprising:
a humidification module (210) configured to humidify air supplied from outside using moisture in off-gas discharged from a fuel cell stack; and
a cap (220) coupled to one end of the humidification module (210), wherein
the humidification module (210) comprises:
a middle case (211); and
two or more cartridges (212) disposed in the middle case (211), the cartridges (212) comprising a plurality of hollow fiber membranes (212a), and
the humidifier (500) further comprises a packing member (530) airtightly coupled to one end of the humidification module (210) through a mechanical assembly method such that the cap (220) fluidly communicates only with the hollow fiber membranes (212a),
wherein
the packing member (530) comprises:
a packing portion (231) having two or more holes (H) into which ends of the cartridges (212) are inserted, respectively; and the packing portion (231) being interposed between the middle case (211) and the cartridges (212), and
an edge portion (232) surrounding the packing portion (231),
the packing portion (231) comprises:
a main body (231a) including a peripheral portion (231aa) and at least one rib (231ab) between the holes (H); and
two or more wing portions (231b) respectively surrounding the holes (H) and respectively clinging to the ends of the cartridges (212) inserted into the holes (H).

2. The humidifier (500) according to claim 1, wherein each of the wing portions (231b) is inclined relative to the main body (231a) at a predetermined angle such that the packing portion (231) has a first groove (G1) between the main body (231a) and each of the wing portions (231b).

3. The humidifier (500) according to claim 2, wherein
the packing portion (231) has a first surface facing the cap (220) and a second surface opposite thereto, and
the first groove (G1) is formed on the first surface.

4. The humidifier (500) according to claim 1, wherein each of the wing portions (231b) projects from the main body (231a) toward a center of the corresponding hole (H).

5. The humidifier (500) according to claim 1, wherein each of the wing portions (231b) comprises first and second sub-wing portions (231ba, 231bb) arranged side by side in a central axial direction of the corresponding hole (H).

6. The humidifier (500) according to claim 5, wherein each of the first and second sub-wing portions (231ba, 231bb) projects from the main body (231a) toward a center of the corresponding hole (H).

7. The humidifier (500) according to claim 5, wherein
one of the first and second sub-wing portions (231ba, 231bb) projects from the main body (231a) toward a center of the corresponding hole (H), and
the other of the first and second sub-wing portions (231ba, 231bb) is inclined relative to the main body (231a) at a predetermined angle.

8. The humidifier (500) according to claim 1, wherein each of the holes (H) and the wing portions (231b) has a shape corresponding to a shape of the end of the cartridge (212) inserted into the corresponding hole (H).

9. The humidifier (500) according to claim 1, wherein the edge portion (232) has a second groove (G2) into which at least a portion of an end of the middle case (211) is inserted.

10. The humidifier (500) according to claim 9, wherein
the main body (231a) has a first surface facing the cap (220) and a second surface opposite thereto, and
the main body (231a) has a third groove (G3) formed on at least one of the first and second surfaces.

11. The humidifier (500) according to claim 1, wherein
the packing member (530) has a first surface facing the cap (220) and a second surface opposite thereto,
the edge portion (232) has a second groove (G2) into which at least a portion of an end of the middle case (211) is inserted, the second groove (G2) being formed on the second surface, and
the rib (231ab) has a third groove (G3) formed on at least one of the first and second surfaces.

12. The humidifier (500) according to claim 1, wherein
each of the packing portion (231) and the edge portion (232) has first hardness of 10 to 100 Shore A, and
the packing member (530) further comprises a reinforcement member (233) inserted into at least a portion of the main body (231a), the reinforcement member (233) having second hardness higher than the first hardness.

13. The humidifier (500) according to claim 12, wherein the reinforcement member (233) is inserted into the rib (231ab).

14. The humidifier (500) according to claim 1, wherein each of the cartridges (212) further comprises:
an inner case (212c) having an opening at an end thereof, the plurality of hollow fiber membranes (212a) being disposed in the inner case (212c); and
a fixing layer (212b) in which ends of the plurality of hollow fiber membranes (212a) are potted, the fixing layer (212b) closing the opening of the inner case (212c).

15. The humidifier (500) according to claim 14, wherein
at least a portion of the fixing layer (212b) is located outside the inner case (212c), and
the wing portion (231b) is in tight contact with the fixing layer (212b).

16. The humidifier (500) according to claim 14, wherein
an entirety of the fixing layer (212b) is located inside the inner case (212c), and
the wing portion (231b) is in tight contact with the inner case (212c).

## Patentansprüche

1. Befeuchter (500) für eine Brennstoffzelle, wobei der Befeuchter (500) umfasst:
ein Befeuchtungsmodul (210), das so konfiguriert ist, dass es von außen zugeführte Luft unter Verwendung von Feuchtigkeit in Abgas, das von einem Brennstoffzellenstapel abgegeben wird, befeuchtet; und
eine Kappe (220), die mit einem Ende des Befeuchtungsmoduls (210) verbunden ist, wobei
das Befeuchtungsmodul (210) umfasst:
ein Mittelgehäuse (211); und
zwei oder mehr Kartuschen (212), die in dem Mittelgehäuse (211) angeordnet sind, wobei die Kartuschen (212) eine Mehrzahl von Hohlfasermembranen (212a) umfassen, und
der Befeuchter (500) ferner ein Dichtungselement (530) umfasst, welches durch ein mechanisches Montageverfahren luftdicht mit einem Ende des Befeuchtungsmoduls (210) verbunden ist, so dass die Kappe (220) nur mit den Hohlfasermembranen (212a) in Fluidverbindung steht,
wobei
das Dichtungselement (530) umfasst:
einen Packungsabschnitt (231) mit zwei oder mehr Löchern (H), in die jeweils die Enden der Kartuschen (212) eingesetzt werden; und wobei der Packungsabschnitt (231) zwischen dem Mittelgehäuse (211) und den Kartuschen (212) angeordnet ist, und
einen Randabschnitt (232), der den Packungsabschnitt (231) umgibt,
der Packungsabschnitt (231) umfasst:
einen Hauptkörper (231a) mit einem Umfangsabschnitt (231aa) und mindestens einer Rippe (231ab) zwischen den Löchern (H); und
zwei oder mehr Flügelteile (231b), die jeweils die Löcher (H) umgeben und jeweils an den in die Löcher (H) eingesetzten Enden der Kartuschen (212) anliegen.

2. Befeuchter (500) nach Anspruch 1, wobei jeder der Flügelabschnitte (231b) relativ zum Hauptkörper (231a) in einem vorbestimmten Winkel geneigt ist, so dass der Packungsabschnitt (231) eine erste Nut (G1) zwischen dem Hauptkörper (231a) und jedem der Flügelabschnitte (231b) aufweist.

3. Befeuchter (500) nach Anspruch 2, wobei
der Dichtungsabschnitt (231) eine erste, der Kappe (220) zugewandte Oberfläche und eine zweite, dieser gegenüberliegende, Oberfläche aufweist, und
die erste Nut (G1) auf der ersten Oberfläche ausgebildet ist.

4. Befeuchter (500) nach Anspruch 1, wobei jeder der Flügelabschnitte (231b) von dem Hauptkörper (231a) in Richtung einer Mitte des entsprechenden Lochs (H) vorsteht.

5. Befeuchter (500) nach Anspruch 1, wobei jeder der Flügelabschnitte (231b) erste und zweite Unterflügelabschnitte (231ba, 231bb) umfasst, die nebeneinander in einer zentralen axialen Richtung des entsprechenden Lochs (H) angeordnet sind.

6. Befeuchter (500) nach Anspruch 5, wobei jeder der ersten und zweiten Unterflügelabschnitte (231ba, 231bb) von dem Hauptkörper (231a) in Richtung einer Mitte des entsprechenden Lochs (H) vorsteht.

7. Befeuchter (500) nach Anspruch 5, wobei
einer der ersten und zweiten Unterflügelabschnitte (231ba, 231bb) von dem Hauptkörper (231a) in Richtung einer Mitte des entsprechenden Lochs (H) vorsteht, und
der andere der ersten und zweiten Unterflügelabschnitte (231ba, 231bb) relativ zu dem Hauptkörper (231a) in einem vorbestimmten Winkel geneigt ist.

8. Befeuchter (500) nach Anspruch 1, wobei jedes der Löcher (H) und der Flügelabschnitte (231b) eine Form hat, die einer Form des in das entsprechende Loch (H) eingesetzten Endes der Kartusche (212) entspricht.

9. Befeuchter (500) nach Anspruch 1, wobei der Randabschnitt (232) eine zweite Nut (G2) aufweist, in die zumindest ein Teil eines Endes des Mittelgehäuses (211) eingesetzt wird.

10. Befeuchter (500) nach Anspruch 9, wobei
der Hauptkörper (231a) eine der Kappe (220) zugewandte erste Oberfläche und eine, dieser gegenüberliegende, zweite Oberfläche aufweist, und
der Hauptkörper (231a) eine dritte Nut (G3) aufweist, die auf mindestens einer der ersten und zweiten Oberflächen ausgebildet ist.

11. Befeuchter (500) nach Anspruch 1, wobei
das Dichtungselement (530) eine erste, der Kappe (220) zugewandte Oberfläche und eine zweite, dieser gegenüberliegende, Oberfläche aufweist,
der Randabschnitt (232) eine zweite Nut (G2) aufweist, in die zumindest ein Teil eines Endes des Mittelgehäuses (211) eingesetzt ist, wobei die zweite Nut (G2) auf der zweiten Oberfläche ausgebildet ist, und
die Rippe (231ab) eine dritte Nut (G3) aufweist, die auf mindestens einer der ersten und zweiten Oberflächen ausgebildet ist.

12. Befeuchter (500) nach Anspruch 1, wobei
sowohl der Packungsabschnitt (231) als auch der Randabschnitt (232) eine erste Härte von 10 bis 100 Shore A aufweisen, und
das Dichtungselement (530) ferner ein Verstärkungselement (233) umfasst, das in mindestens einen Abschnitt des Hauptkörpers (231a) eingesetzt ist, wobei das Verstärkungselement (233) eine zweite Härte aufweist, die höher als die erste Härte ist.

13. Befeuchter (500) nach Anspruch 12, wobei das Verstärkungselement (233) in die Rippe (231ab) eingesetzt ist.

14. Befeuchter (500) nach Anspruch 1, wobei jede der Kartuschen (212) ferner umfasst:
ein Innengehäuse (212c), das an einem Ende eine Öffnung aufweist, wobei die Mehrzahl von Hohlfasermembranen (212a) in dem Innengehäuse (212c) angeordnet ist; und
eine Befestigungsschicht (212b), in der die Enden der Mehrzahl von Hohlfasermembranen (212a) vergossen sind, wobei die Befestigungsschicht (212b) die Öffnung des Innengehäuses (212c) verschließt.

15. Befeuchter (500) nach Anspruch 14, wobei
zumindest ein Teil der Befestigungsschicht (212b) außerhalb des Innengehäuses (212c) angeordnet ist, und
der Flügelabschnitt (231b) in engem Kontakt mit der Befestigungsschicht (212b) steht.

16. Befeuchter (500) nach Anspruch 14, wobei
die gesamte Befestigungsschicht (212b) sich im Inneren des Innengehäuses (212c) befindet, und
der Flügelabschnitt (231b) in engem Kontakt mit dem Innengehäuse (212c) steht.

## Revendications

1. Humidificateur (500) pour une pile à combustible, l'humidificateur (500) comportant :
un module d'humidification (210) configuré pour humidifier de l'air fourni depuis l'extérieur en utilisant l'humidité dans un effluent gazeux évacué d'un empilement de piles à combustible ; et
un couvercle (220) couplé à une extrémité du module d'humidification (210), dans lequel
le module d'humidification (210) comporte :
un boîtier central (211) ; et
deux cartouches (212) ou plus disposées dans le boîtier central (211), les cartouches (212) comportant une pluralité de membranes à fibres creuses (212a), et
l'humidificateur (500) comporte en outre un élément de garnissage (530) couplé de manière étanche à l'air à une extrémité du module d'humidification (210) par un procédé d'assemblage mécanique de telle sorte que le couvercle (220) communique fluidiquement avec les membranes à fibres creuses (212a),
dans lequel
l'élément de garnissage (530) comporte :
une partie de garnissage (231) ayant deux trous (H) ou plus dans les extrémités desquels les cartouches (212) sont insérées, respectivement ; et la partie de garnissage (231) étant intercalée entre le boîtier central (211) et les cartouches (212), et
une partie de bord (232) entourant la partie de garnissage (231),
la partie de garnissage (231) comporte :
un corps principal (231a) incluant une partie périphérique (231aa) et au moins une nervure (231ab) entre les trous (H) ; et
deux parties d'aile (231b) ou plus entourant respectivement les trous (H) et s'accrochant respectivement aux extrémités des cartouches (212) insérées dans les trous (H).

2. Humidificateur (500) selon la revendication 1, dans lequel chacune des parties d'aile (231b) est inclinée par rapport au corps principal (231a) à un angle prédéterminé de telle sorte que la partie de garnissage (231) a une première rainure (G1) entre le corps principal (231a) et chacune des parties d'aile (231b).

3. Humidificateur (500) selon la revendication 2, dans lequel
la partie de garnissage (231) a une première surface dirigée vers le couvercle (220) et une seconde surface opposée à celle-ci, et
la première rainure (G1) est formée sur la première surface.

4. Humidificateur (500) selon la revendication 1, dans lequel chacune des parties d'aile (231b) fait saillie à partir du corps principal (231a) vers un centre du trou (H) correspondant.

5. Humidificateur (500) selon la revendication 1, dans lequel chacune des parties d'aile (231b) comporte des première et seconde parties de sous-aile (231ba, 231bb) agencées côte à côte dans une direction axiale centrale du trou (H) correspondant.

6. Humidificateur (500) selon la revendication 5, dans lequel chacune des première et seconde parties de sous-aile (231ba, 231bb) fait saillie à partir du corps principal (231a) vers un centre du trou (H) correspondant.

7. Humidificateur (500) selon la revendication 5, dans lequel
l'une des première et seconde parties de sous-aile (231ba, 231bb) fait saillie à partir du corps principal (231a) vers un centre du trou (H) correspondant, et
l'autre des première et seconde parties de sous-aile (231ba, 231bb) est inclinée par rapport au corps principal (231a) à un angle prédéterminé.

8. Humidificateur (500) selon la revendication 1, dans lequel chaque élément parmi les trous (H) et les parties d'aile (231b) a une forme correspondant à une forme de l'extrémité de la cartouche (212) insérée dans le trou (H) correspondant.

9. Humidificateur (500) selon la revendication 1, dans lequel la partie de bord (232) a une deuxième rainure (G2) dans laquelle au moins une partie d'une extrémité du boîtier central (211) est insérée.

10. Humidificateur (500) selon la revendication 9, dans lequel
le corps principal (231a) a une première surface dirigée vers le couvercle (220) et une seconde surface opposée à celle-ci, et
le corps principal (231a) a une troisième rainure (G3) formée sur au moins une des première et seconde surfaces.

11. Humidificateur (500) selon la revendication 1, dans lequel
l'élément de garnissage (530) a une première surface dirigée vers le couvercle (220) et une seconde surface opposée à celle-ci,
la partie de bord (232) a une deuxième rainure (G2) dans laquelle au moins une partie d'une extrémité du boîtier central (211) est insérée, la deuxième rainure (G2) étant formée sur la seconde surface, et
la nervure (231ab) a une troisième rainure (G3) formée sur au moins une des première et seconde surfaces.

12. Humidificateur (500) selon la revendication 1, dans lequel
chaque partie parmi la partie de garnissage (231) et la partie de bord (232) a une première dureté de 10 à 100 Shore A, et
l'élément de garnissage (530) comporte en outre un élément de renfort (233) inséré dans au moins une partie du corps principal (231a), l'élément de renfort (233) ayant une seconde dureté supérieure à la première dureté.

13. Humidificateur (500) selon la revendication 12, dans lequel l'élément de renfort (233) est inséré dans la nervure (231ab).

14. Humidificateur (500) selon la revendication 1, dans lequel chacune des cartouches (212) comporte en outre :
un boîtier intérieur (212c) ayant une ouverture à une extrémité de celui-ci, la pluralité de membranes à fibres creuses (212a) étant disposée dans le boîtier intérieur (212c) ; et
une couche de fixation (212b) dans laquelle des extrémités de la pluralité de membranes à fibres creuses (212a) sont enrobées, la couche de fixation (212b) fermant l'ouverture du boîtier intérieur (212c).

15. Humidificateur (500) selon la revendication 14, dans lequel
au moins une partie de la couche de fixation (212b) est située à l'extérieur du boîtier intérieur (212c), et
la partie d'aile (231b) est en contact serré avec la couche de fixation (212b).

16. Humidificateur (500) selon la revendication 14, dans lequel
la totalité de la couche de fixation (212) est située à l'intérieur du boîtier intérieur (212c), et
la partie d'aile (231b) est en contact serré avec le boîtier intérieur (212c).
